Europäisches Patentamt

European Patent Office

Office européen des brevets

(11) Veröffentlichungsnummer: **0 623 884 A2**

# (12) EUROPÄISCHE PATENTANMELDUNG

(21) Anmeldenummer: **94201163.6**

(22) Anmeldetag: **28.04.94**

(51) Int. Cl.5: **G06F 15/68**

(30) Priorität: **05.05.93 DE 4314768**

(43) Veröffentlichungstag der Anmeldung:
**09.11.94 Patentblatt 94/45**

(84) Benannte Vertragsstaaten:
**DE FR GB NL**

(71) Anmelder: **Philips Patentverwaltung GmbH**
**Wendenstrasse 35c**
**D-20097 Hamburg (DE)**
(84) **DE**

(71) Anmelder: **PHILIPS ELECTRONICS N.V.**
**Groenewoudseweg 1**
**NL-5621 BA Eindhoven (NL)**
(84) **FR GB NL**

(72) Erfinder: **Koppe, Reiner Heinrich, Dr., c/o**
**Philips**
**Patentverwaltung GmbH,**
**Wendenstrasse 35c**
**D-20097 Hamburg (DE)**
Erfinder: **Klotz, Erhard Paul Artur, c/o Philips**
**Patentverwaltung GmbH,**
**Wendenstrasse 35c**
**D-20097 Hamburg (DE)**

(74) Vertreter: **Hartmann, Heinrich, Dipl.-Ing. et al**
**Philips Patentverwaltung GmbH,**
**Wendenstrasse 35c**
**D-20097 Hamburg (DE)**

(54) Verfahren zur quantitativen Bestimmung der Verzerrungen von Röntgenaufnahmen und Anordnung zur Druchführung des Verfahrens.

(57) Die Erfindung betrifft ein Verfahren zum quantitativen Bestimmen der Verzerrungen von mittels eines Bildverstärkers erzeugten Röntgenaufnahmen, bei dem zunächst ein verzerrtes Röntgen-Testbild eines Testobjektes (G) angefertigt und die Koordinaten ($s_g$, und $t_g$) einer Anzahl diskreter Bildpunkte in dem Testbild gemessen werden, die innerhalb des Testobjektes Objektpunkten ($x_g$, $y_g$) mit definierter Lage und von ihrer Umgebung deutlich abweichende Absorption zugeordnet sind sowie eine Anordnung zur Durchführung dieses Verfahrens. Hierbei wird eine Korrektur auch stärkerer Verzerrungen durch folgende Verfahrensschritte möglich:

a) näherungsweise Berechnung der Koordinaten ($u_g$, $v_g$) der Bildpunkte im Testbild, in denen diese Objektpunkte abgebildet werden unter Berücksichtigung der geometrischen Verzerrungen,

b) Bestimmung der Parameter von Transformationsfunktionen ($s(u,v)$, $t(u,v)$), mit denen die gemessenen Koordinaten ($s_g$, $t_g$) aus den berechneten Koordinaten ($u_g$, $v_g$) berechenbar sind,

c) näherungsweise Berechnung der Koordinaten ($u$, $v$) eines Bildpunktes in einem verzerrten Bild aus seinen Koordinaten ($x$, $y$) in einem unverzerrten Bild,

d) Anwendung der Transformationen gemäß b) auf die so berechneten Koordinaten ($u$, $v$) zwecks Ermittlung der tatsächlichen Koordinaten ($s$, $t$) im verzerrten Bild,

e) Wiederholung der Schritte c) und d) für alle Bildpunkte.

Fig.1

EP 0 623 884 A2

Die Erfindung betrifft ein Verfahren zum quantitativen Bestimmen der Verzerrungen von mittels eines Bildverstärkers erzeugten Röntgenaufnahmen, bei dem zunächst ein verzerrtes Röntgen-Testbild eines Testobjektes angefertigt und die Koordinaten einer Anzahl diskreter Bildpunkte in dem Testbild gemessen werden, die innerhalb des Testobjektes Objektpunkten mit definierter Lage und von ihrer Umgebung deutlich abweichende Absorption zugeordnet sind.

Röntgenaufnahmen, die mittels eines Bildverstärkers erzeugt werden, weisen im allgemeinen Verzerrungen auf, weil der für die Röntgenstrahlung empfindliche Eingangsleuchtschirm gekrümmt ist. Daneben gibt es noch weitere Ursachen für Verzerrungen, jedoch sind diese im allgemeinen weniger schwerwiegend. Die quantitative Bestimmung der Verzerrungen läuft darauf hinaus, einen Zusammenhang zwischen der Lage eines Punktes im Untersuchungsbereich - beziehungsweise der Lage x, y, in der dieser Punkt in einer verzerrungsfreien Röntgenaufnahme abgebildet würde - und der Lage s, t anzugeben, die die Abbildung dieses Punktes in der verzerrten Röntgenaufnahme hat. Wenn dieser Zusammenhang für alle Bildpunkte bekannt ist, ist es in bekannter Weise möglich, aus der verzerrten Röntgenaufnahme eine unverzerrte Röntgenaufnahme herzustellen.

Bei einem aus der WO-A-91/01071 bekannten Verfahren der eingangs genannten Art dient als Testobjekt ein Gitter, dessen Gitterlinien durch Metallstreifen gebildet werden, die auf einem ebenen, für die Röntgenstrahlung transparenten Substrat aufgebracht sind. Mittels eines automatischen Mustererkennungsverfahrens werden die Positionen der Gitterlinien im Testbild bestimmt, wonach die Schnittpunkte der Gitterlinien berechnet werden können. Für diese Schnittpunkte ist einerseits ihre Lage im verzerrten Testbild und andererseits ihre Lage im Testobjekt bzw. in einem unverzerrten Bild des Testobjekts genau bekannt, so daß für diese Schnittpunkte eine Bestimmung der Verzerrungen und damit die Erzeugung eines von Verzerrungen freien Ausgangsbildes möglich wird. Für alle Bildpunkte, die nicht mit einem der Schnittpunkte identisch sind, wird die Verzerrung mittels einer bilinearen Interpolation korrigiert, in die der Abstand des betreffenden Bildpunktes von den benachbarten Schnittpunkten eingeht. Hierbei ergeben sich Ungenauigkeiten, weil der Abstand der Gitterlinien groß im Vergleich zu den Abmessungen eines Bildpunktes bzw. Bildelementes (Pixel) ist. Bei starken Verzerrungen ist auch die automatische Mustererkennung schwierig.

Weiterhin ist in der Zeitschrift IEEE Comp. in Cardiology, Boston, Okt. 7-10, 1986 (1987), Seiten 615-618 ein Verfahren der eingangs genannten Art beschrieben. Dabei wird zunächst ein Röntgenbild eines Testobjektes angefertigt, das in einem 1cm-Raster Bronzekugeln mit 2 mm Durchmesser enthält. In dem so hergestellten Testbild wird mittels eines geeigneten Mustererkennungsverfahrens automatisch die Lage der Mittelpunkte der Bronzekugeln bestimmt. Danach werden die Parameter einer Transformationsfunktion - vorzugsweise mit Polynomen zweiten oder höheren Grades - so bestimmt, daß mit Hilfe dieser Polynome möglichst genau aus den Koordinaten, die die Mittelpunkte der Bronzekugeln in einem unverzerrten Ausgangsbild hätten, ihre Koordinaten im verzerrten Eingangsbild berechnet werden können. Diese Parameter - d.h. die Koeffizienten der Polynome - werden gespeichert und bei jeder nachfolgenden Röntgenaufnahme dazu benutzt, um für jeden Bildpunkt in dem - noch zu erzeugenden - Ausgangsbild die Lage des zugehörigen Bildpunktes im verzerrten Eingangsbild, d.h. der jeweiligen Röntgenaufnahme, zu berechnen. Auch hiermit ist nur eine begrenzte Genauigkeit erzielbar. Man könnte die Genauigkeit in den Stützstellen dadurch verbessern, daß man Polynome dritten oder noch höheren Grades verwendet, doch ergibt sich bei Polynomen z.B 6. Grades eine Verschlechterung außerhalb der Stützstellen. (Die Stützstellen sind durch die Lage der Kugeln bei dem vorangegangenen Röntgen-Testbild bestimmt).

Bei vielen Untersuchungsmethoden ist aber für eine korrekte Entzerrung der Röntgenaufnahmen eine genauere quantitative Bestimmung der Verzerrungen erforderlich. Dies gilt insbesondere auch für Schrägaufnahmen, d.h. für solche Röntgenaufnahmen, bei denen die optische Achse des Bildverstärkers und der Zentralstrahl, d.h. die Verbindungsgerade zwischen dem Fokus der Strahlenquelle und dem Mittelpunkt des Eingangsschirms des Bildverstärkers einen von Null verschiedenen Winkel einschließen. Hierbei entstehen nämlich wesentlich stärkere Verzerrungen als bei einer sogenannten Zentralprojektion, bei der Zentralstrahl und optische Achse zusammenfallen.

Aufgabe der vorliegenden Erfindung ist es, ein Verfahren der eingangs genannten Art so auszugestalten, daß die Verzerrungen genauer bestimmt werden können. Eine erste Lösung dieser Aufgabe sieht folgende Verfahrensschritte vor:

a) näherungsweise Berechnung der Koordinaten der Bildpunkte im Testbild, in denen diese Objektpunkte abgebildet werden unter Berücksichtigung der geometrischen Verzerrungen,

b) Bestimmung der Parameter von Transformationsfunktionen, mit denen die gemessenen Koordinaten aus den berechneten Koordinaten berechenbar sind,

c) näherungsweise Berechnung der Koordinaten eines Bildpunktes in einem verzerrten Bild aus seinen Koordinaten in einem unverzerrten Bild,

d) Anwendung der Transformationsfunktionen gemäß b) auf die so berechneten Koordinaten zwecks Ermittlung der tatsächlichen Koordinaten im verzerrten Bild,

e) Wiederholung der Schritte c) und d) für alle Bildpunkte.

Eine zweite Lösung dieser Aufgabe sieht dagegen die folgenden Verfahrensschritte vor:

a) näherungsweise Berechnung der Koordinaten der Bildpunkte im Testbild, in denen diese Objektpunkte abgebildet werden unter Berücksichtigung der geometrischen Verzerrungen,

b) Bestimmung der Parameter von Transformationsfunktionen, mit denen die näherungsweise berechneten Koordinaten aus den gemessenen Koordinaten berechenbar sind,

c) Anwendung der Transformationsfunktionen gemäß b) auf die Koordinaten eines Bildpunktes im verzerrten Bild zwecks Ermittlung der näherungsweise unter Berücksichtigung der geometrischen Verzerrungen berechenbaren Koordinaten,

d) Berechnung der Koordinaten eines Bildpunktes in einem entzerrten Bild, aus den durch die Transformation erhaltenen Koordinaten,

e) Wiederholung der Schritte c) und d) für alle Bildpunkte.

Bei beiden Lösungen werden also die Koordinaten des Testbildes nicht nur gemessen, sondern sie werden auch - unabhängig von dieser Messung - näherungsweise unter Berücksichtigung der geometrischen Verzerrungen berechnet (Schritt a). Eine solche Berechnung ist ohne weiteres möglich, wenn die Krümmung des Bildverstärkereingangsschirmes und die Position des Fokus der Strahlenquelle und des Testobjektes in bezug auf den Bildverstärker bei der Anfertigung des Testbildes bekannt sind. Die so berechneten Koordinaten sind mit den im Testbild gemessenen (exakten) Koordinaten nicht identisch, weil es außer der Krümmung des Bildverstärkereingangsschirmes noch andere (weniger ausgeprägte) Ursachen für die Verzerrungen gibt, beispielsweise die Wirkung des Erdmagnetfeldes auf den Röntgenbildverstärker.

Die berechneten Koordinaten stimmen aber wesentlich besser mit den gemessenen Koordinaten überein als die Koordinaten in einem idealen, unverzerrten Röntgenbild, das - bis auf einen Maßstabsfaktor - mit der (verzerrungsfreien) Projektion des Testobjektes identisch ist.

Deshalb lassen sich die Parameter von Transformationsfunktionen - vorzugsweise von Polynomen - relativ einfach bestimmen (Schritt b), mit denen entweder die gemessenen Koordinaten aus den näherungsweise berechneten Koordinaten (Anspruch 1) oder die näherungsweise berechneten Koordinaten aus den gemessenen Koordinaten (Anspruch 2) mit großer Genauigkeit errechnet werden können. Die so berechneten Transformationsfunktionen gelten nicht nur für die Bildpunkte, an denen die Objektpunkte des Testobjektes abgebildet werden, sondern für alle Bildpunkte des verzerrten bzw. des unverzerrten Bildes. Wegen der umkehrbar eindeutigen Zuordnung zwischen den Bildpunkten im verzerrten Bild einerseits und in dem entzerrten (unverzerrten) Bild andererseits ist es möglich, mit Hilfe der gefundenen Transformationen den Zusammenhang zwischen den Koordianten im verzerrten und im entzerrten Bild auf zwei verschiedenen Weisen zu berechnen:

Bei der Lösung nach Anspruch 1 werden aus den Koordinaten x, y eines Bildpunktes im entzerrten bzw. unverzerrten Bild unter Berücksichtigung der geometrischen Verzerrungen näherungsweise die Koordinaten dieses Bildpunktes in einem verzerrten Bild berechnet und daraus durch Anwendung der Transformationsfunktionen die tatsächlichen Koordinaten im verzerrten Bild. Bei der Lösung nach Anspruch 2 ist der Rechnungsgang umgekehrt; aus den tatsächlichen Koordinaten s, t im verzerrten Bild werden durch Anwendung der Transformationsfunktionen (Zwischen-) Koordinaten berechnet, aus denen unter Berücksichtigung der geometrischen Verzerrungen die Koordinaten x, y im unverzerrten Bild berechnet werden können.

Die so errechnete Zuordnung zwischen den Bildpunkten x, y im unverzerrten Bild und den Bildpunkten s, t im verzerrten Bild gestattet in bekannter Weise die Korrektur der Verzerrungen von nachfolgenden Röntgenaufnahmen. Dieses ist auf verschiedene Weise möglich. Einerseits kann die berechnete Zuordnung für sämtlich Bildpunkte in Form einer Adreßliste gespeichert werden, die bei allen nachfolgenden Röntgenaufnahmen zur Korrektur der Verzerrungen herangezogen werden kann, wie in der DE-OS 38 43 232 ( = PHD 88-268) beschrieben ist. Hierbei werden nicht nur die Verfahrensschritte a) und b), sondern auch die Schritte c) bis e) nur einmal durchgeführt. - Die andere Möglichkeit besteht darin, mit Hilfe der Transformationsfunktion für jede Röntgenaufnahme den Zusammenhang zwischen der Lage der Bildpunkte in einem unverzerrten Röntgenbild und der verzerrten Röntgenaufnahme neu zu berechnen. Hierbei ist zwar der Rechenaufwand größer, jedoch ist der Speieheraufwand geringer, weil lediglich die Parameter der Transformationsfunktionen (z.B. die Koeffizienten von Polynomen) gespeichert werden müssen.

Die Erfindung ist insbesondere bei der sogenannten Tomosynthese anwendbar, bei dem eine Anzahl von aus unterschiedlichen Strahlenquellenpositionen aufgenommenen digital vorliegenden Röntgenaufahmen zwecks Erzeugung eines Schichtbildes überlagert wird. Dafür ist nach einer Weiterbildung vorgesehen, daß aus jeder Strahlenquellenposition je ein Röntgen-Testbild des Test-objektes erzeugt wird, und daß jedes Testbild nach einem der vorhergehenden Ansprüche verarbeitet wird.

Eine Anordnung zur Durchführung des Verfahrens nach Anspruch 1 ist gekennzeichnet durch

a) eine Strahlenquelle zur Erzeugung eines Strahlenbündels,

b) einen Röntgenbildverstärker zur Umsetzung von Röntgenstrahlung in sichtbares Licht,

c) einen Bildwandler zur Umsetzung eines sichtbaren Bildes in eine Folge von digitalen Bildwerten, die die Helligkeit des Bildes in seinen einzelnen Bildpunkten darstellen,

d) eine Speicheranordnung zur Speicherung der Bildwerte,

e) Mittel zur Erzeugung eines Röntgentestbildes eines Testobjektes (G) mit Objektpunkten in definierter Lage und von ihrer Umgebung deutlich abweichende Absorption,

f) Mittel zum Bestimmen der Koordinaten der Bildpunkte im Testbild, in denen die Objektpunkte abgebildet werden,

g) Mittel zur näherungsweisen Berechnung der Koordinaten der Bildpunkte im Testbild, in denen diese Objektpunkte abgebildet werden unter Berücksichtigung der geometrischen Verzerrungen,

h) Mittel zur Bestimmung der Parameter von Transformationsfunktionen, mit denen die ge-messen Koordinaten aus den berechneten Koordinaten berechenbar sind.

i) Mitteln zum Speichern der so bestimmten Parameter der Transformationsfunktionen,

j) Mittel zur näherungsweise Berechnung der Koordinaten eines jeden Bildpunktes in einem verzerrten Bild aus seinen Koordinaten in einem unverzerrten Bild,

k) Mitteln zur Anwendung der gespeicherten Transformationsfunktionen auf die so berechneten Koordinaten zwecks Ermittlung der tatsächlichen Koordinaten im verzerrten Bild.

Eine Anordnung zur Durchführung des Verfahrens nach Anspruch 2 ist demgegenüber gekennzeichnet durch

a) eine Strahlenquelle zur Erzeugung eines Strahlenbündels,

b) einen Röntgenbildverstärker zur Umsetzung von Röntgenstrahlung in sichtbares Licht,

c) einen Bildwandler zur Umsetzung eines sichtbaren Bildes in eine Folge von digitalen Bildwerten, die die Helligkeit des Bildes in seinen einzelnen Bildpunkten darstellen,

d) eine Speicheranordnung zur Speicherung der Bildwerte,

e) Mittel zur Erzeugung eines Röntgentestbildes eines Testobjektes (G) mit Objektpunkten in definierter Lage und von ihrer Umgebung deutlich abweichende Absorption,

f) Mittel zum Bestimmen der Koordinaten der Bildpunkte im Testbild, in denen die Objektpunkte abgebildet werden,

g) Mittel zur näherungsweisen Berechnung der Koordinaten der Bildpunkte im Testbild, in denen diese Objektpunkte abgebildet werden unter Berücksichtigung der geometrischen Verzerrungen,

h) Mittel zur Bestimmung der Parameter von Transformationsfunktionen, mit denen die näherungsweise berechneten Koordinaten aus den gemessenen Koordinaten berechenbar sind,

i) Mittel zum Speichern der so bestimmten Parameter der Transformationsfunktionen,

j) Mittel zur Anwendung der gespeicherten Transformationsfunktionen auf die Koordinaten eines Bildpunktes im verzerrten Bild zum Erhalten von Zwischen-Koordinaten,

k) Mittel zur Berechnung der Koordinaten im unverzerrten Bild aus den so ermittelten Zwischen-Koordinaten.

Die Erfindung wird nachstehend anhand der Zeichnungen näher erläutert. Es zeigen:

Fig. 1 eine Anordnung für lineare To-mosynthese, bei der die Erfin-dung anwendbar ist,

Fig. 2 die dem Bildverstärker nach-geschaltete Bildverarbeitungs-kette,

Fig. 3 den Zusammenhang zwischen den Objektpunkten und den unter Berücksichtigung der geometrischen Verzerrungen näherungsweise berechneten Bildpunkten,

Fig. 4a und b die Lage der Objektpunkte ei-nes gleichmäßigen Kugelra-sters sowie die berechneten und die gemessenen Koordi-naten der zugehörigen Bild-punkte im verzerrten Bild,

Fig. 5 ein Flußdiagramm zur Erläute-rung der quantitativen Bestim-mung der Verzerrungen.

Fig. 6 ein modifiziertes Flußdiagramm.

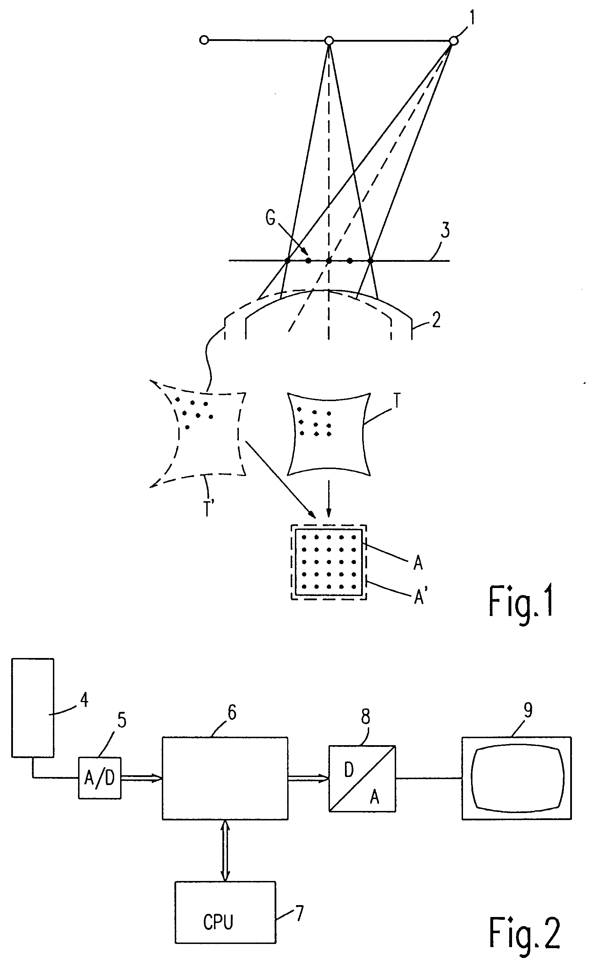

In Fig. 1 ist mit 1 eine Strahlenquelle bezeichnet, beispielsweise ein Röntgenstrahler und mit 2 der eingangsseitige Teil eines Röntgenbildverstärkers. Bei dieser Tomosyntheseanordnung werden der Röntgenstrahler 1 und der Röntgenbildverstärker 2 gegensinnig zueinander auf geradlinigen Bahnen in eine Anzahl von Positionen bewegt, in denen Röntgenaufnahmen angefertigt werden. In der Zeichnung sind nur drei (bzw. für den Bildverstärker zwei) derartige Positionen angedeutet, doch kann die Zahl dieser Positionen wesentlich höher sein, z.B. 50. Die gegensinnige Verschiebung erfolgt dabei so, daß die Verbindungslinien zwischen der jeweiligen Position des Röntgenstrahlers und des Mittelpunktes des Röntgenbildverstärkers sich in dem Drehpunkt des Systems schneiden, der in einer Ebene 3, der sogenannten Fulcrumebene, liegt.

Aus dem in den verschiedenen Strahlenquellenpositionen gewonnenen Röntgenaufnahmen können durch Überlagerung Schichtaufnahmen hergestellt werden, in denen eine Schicht eines zwischen der Strahlenquelle 1 und dem Röntgenbildverstärker 2 angeordneten Objektes scharf abgebildet wird, während alle übrigen Bereiche des Objektes unscharf werden. Werden die Röntgenaufnahmen beispielsweise (ohne Verschiebung) Bildpunkt für Bildpunkt addiert, dann stellt die so gewonnene Schichtaufnahme die Fulcrumebene 3 dar. Will man eine Schichtaufnahme einer anderen Ebene herstellen, müssen die Röntgenaufnahmen in Abhängigkeit von der Lage der Schicht bezüglich der Fulcrumebene 3 relativ zueinander verschoben werden, bevor sie addiert werden.

Diese bildpunktweise Addition setzt jedoch voraus, daß die Röntgenaufnahmen frei von jeglichen Verzerrungen sind. Wie Fig. 1 deutlich zeigt, ist der Eingangsschirm des Röntgenbildverstärkers, der die Röntgenstrahlen empfängt und in ein sichtbares Bild umsetzt, gekrümmt. Zur quantitativen Bestimmung dieser Verzerrungen ist in Fig. 1 ein Testobjekt G angeordnet, in diesem Fall in der Fulcrumebene 3. Das Testobjekt G kann in einem regelmäßigen Abstand von z.B. 10 oder 15 mm Metallkugeln enthalten, die in eine ebene, strahlentransparente Platte, beispielsweise aus Kunststoff, eingebettet sind. Die von diesem Test-objekt erzeugten Test-Röntgenbilder T weisen Verzerrungen auf, wobei das bei der Schrägprojektion erzeugte, durch gestrichelte Linien angedeutete Testbild T' stärkere Verzerrungen aufweist, als das aus der mittleren Position durch Zentral-projektion erzeugte, mit durchgezogenen Linien angedeutete Testbild T. Man erkennt, daß die im Testobjekt G enthaltenen Kugeln in den beiden Testbildern an unterschiedlichen Stellen abgebildet werden, so daß eine Überlagerung dieser Testbilder nicht zu einer scharfen Abbildung des Testobjektes führen könnte. Erst wenn die Testbilder in unverzerrte Ausgangsbilder A und A' umgesetzt sind (dieser Schritt ist in Fig. 1 durch die Pfeile symbolisiert), ist eine Überlagerung möglich. Die unverzerrten bzw. entzerrten Ausgangsbilder entsprechen - gegebenenfalls bis auf einen Maßstabsfaktor - dem Testobjekt (bzw. einer Projektion des Testobjekts auf eine zur Fulcrumebene 3 parallele Ebene).

Fig. 2 zeigt die dem Bildverstärker nachfolgende Anordnung zur Verarbeitung der Testbilder. Sie umfaßt eine Videokamera 4, die über eine nicht näher dargestellte Optik auf den Ausgangsbildschirm des Röntgenbildverstärkers 2 fokussiert ist, der ein verkleinertes, aber in seiner Helligkeit verstärktes sichtbares Bild des Test-objektes liefert. Das von der Videokamera 4 gelieferte Videosignal wird über einen Analog-Digitalwandler 5 einer Speicheranordnung 6 zugeführt, deren Speicherkapazität ausreichen muß, um sämtliche Röntgenaufnahmen zu speichern. Zusätzlich muß diese Speicheranordnung für jedes Bild entweder einen Satz von Parametern zur Berechnung entzerrter Bilder oder Adreßlisten speichern, die eine Zuordnung zwischen den Koordinaten x, y im entzerrten Bild und den Koordinaten s, t in dem von der Videokamera 4 gelieferten verzerrten Bild liefert.

Mittels eines Prozeßrechners 7 werden anhand der Röntgen-Testbilder die Verzerrungen der Röntgenbildverstärker-Videokamera-Kette quantitativ bestimmt, die verzerrten Bilder davon abhängig korrigiert und zur Erzeugung von Schichtbildern überlagert, die über einen Digital-Analog-Wandler 8 einem Videomonitor 9 zugeführt werden.

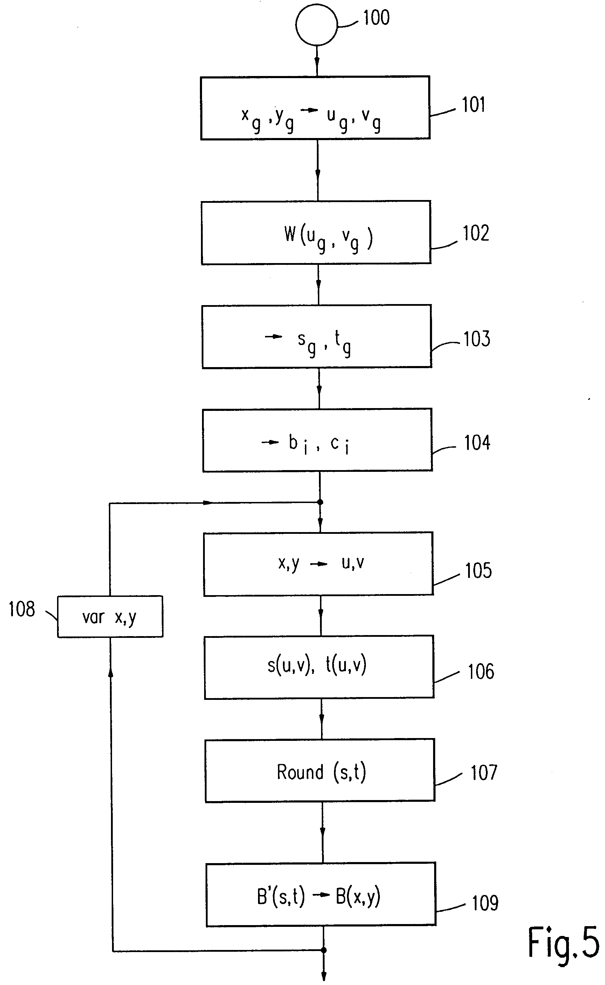

Im folgenden wird anhand des in Fig. 5 dargestellten Diagramms erläutert, auf welche Weise die quantitative Bestimmung der Verzerrungen für eine einzige Strahlenquellenposition erfolgt.

Die Vorbereitung des Verfahrens zur quantitativen Bestimmung der Verzerrungen (Schritt 100) setzt voraus, daß zwischen dem Röntgenstrahler 1 und dem Röntgenbildverstärker 2 ein Testobjekt G eingefügt ist, vorzugsweise das anhand von Fig. 1 erläuterte gleichmäßige Raster von in einer Ebene matrixförmig angeordneten Metallkugeln, deren Absorption wesentlich von ihrer Umgebung - beispielsweise einer ebenen Kunststoffplatte, in die sie eingebettet sind - abweicht. Die Metallkugeln können dabei einen Abstand von ca. 15 mm voneinander haben. Das Testobjekt wird so ausgerichtet, daß in der zentralen Position der Strahlenquelle, in der die Symmetrieachse des Bildverstärkers 2 mit dem Zentralstrahl zusammenfällt, der die Strahlenquelle mit dem Mittelpunkt des Bildverstärkereingangsschirms verbindet, der Zentralstrahl bzw. die Symmetrieachse senkrecht zur Ebene des Testobjekts G verläuft, und diesen in seinem Zentrum schneidet. Dies kann beispielsweise dadurch erreicht werden, daß mit dem Testobjekt G eine nicht näher dargestellte Kalibriervorrichtung gekoppelt ist, die oberhalb des Zentrums des Testobjekts eine Metallmarke enthält, die im Zentrum abgebildet wird, wenn das Testgitter die gewünschte Lage in bezug auf den Röntgenbildverstärker 2 einnimmt. Das Testobjekt G und/oder die Videokamera sollten dabei (durch Drehung um ihre Mittelachse) so zueinander ausgerichtet sein, daß die Zeilenrichtung in dem von der Videokamera gelieferten Bild parallel zu der zentralen Reihe oder Spalte von Kugeln verläuft. Diese einjustierte Position des Testobjekts relativ zum Röntgenbildverstärker 2 wird bei allen folgenden Röntgenaufnahmen aus den verschiedenen Strahlenquellenpositionen beibehalten, z.B. durch eine mechanische Verbindung zwischen dem Testobjekt G und dem Bildverstärker 2.

Das Testobjekt G kann, wie in Fig. 1 dargestellt, in der Fulcrumebene 3 angeordnet sein. Es kann aber auch in einer anderen dazu parallelen Ebene angeordnet sein, vorzugsweise so dicht wie möglich am Röntgenbildverstärker. In diesem Fall werden die Metallkugeln am schärfsten abgebildet.

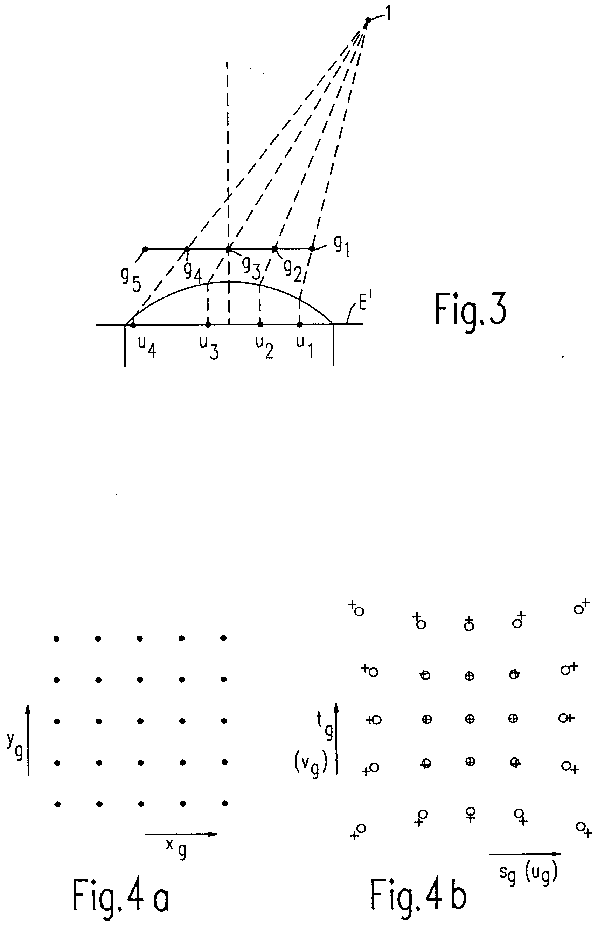

Der erste Verfahrensschritt 101 besteht danach darin, unter Berücksichtigung der geometrischen Verzerrungen näherungsweise die Koordinaten der Bildpunkte zu berechnen, in denen die Mittelpunkte der Metallkugeln des Testobjekts G abgebildet werden. Zur Erläuterung wird auf Fig. 3 verwiesen, die graphisch den Zusammenhang zwischen der Lage der Metallkugeln des Testobjekts (Fig. 1 und Fig. 3 zeigen jeweils nur eine Zeile dieser Kugeln), d.h. der Koordinaten ($g_1$, $g_2$ . . . usw.) und den näherungsweise berechneten Koordinaten $u_1$, $u_2$, $u_3$ . . . usw. der Bildpunkte im Testbild dargestellt, in denen die Metallkugeln abgebildet werden. Um das Ausmaß der Verzerrungen deutlicher zu machen, ist in Fig. 3 die Lage für einen schrägen Strahleneinfall dargestellt, bei dem sich der Röntgenbildverstärker 2 und die Strahlenquelle 1 beiderseits ihrer mittleren Position befinden. Die näherungsweise Berechnung der Koordinaten $u_1$, $u_2$, $u_3$ . . . usw. kann nur die Krümmung des Eingangsschirms des Röntgenbildverstärkers 2 und dessen Lage in bezug auf die Strahlenquelle 1 berücksichtigen. Dies sind aber die für die Verzerrungen wesentlichen Faktoren, so daß die näherungsweise berechneten Koordinaten im verzerrten Bild schon recht gut mit den Koordinaten übereinstimmen, die die Abbildungen der Kugeln im verzerrten Bild tatsächlich einnehmen.

Diese näherungsweise Berechnung ist möglich, sobald die Lage der Strahlenquelle 1 in bezug auf den Röntgenbildverstärker und dessen Krümmung bekannt sind. Die Krümmung des Eingangsschirms des Röntgenbildverstärkers läßt sich durch eine mathematische Funktion beschreiben, z.B. durch

$$r^2 = a_1 z \ + \ a_2 z^2 \ + \ a_3 z^3 \qquad (1)$$

r bezeichnet dabei den Abstand eines Punktes auf der Eingangsfläche des Bildverstärkers, von dessen Symmetrieachse, während z den Abstand dieses Punktes von einer das Zentrum des Eingangsleuchtschirms des Bildverstärkers tangierenden Ebene bezeichnet. $a_1$, $a_2$ und $a_3$ sind Konstanten.

Die Berechnung des Schnittpunktes zwischen der durch die Gleichung 1 definierten Oberfläche des Eingangsleuchtschirms und einer Geraden, die die Strahlenquelle mit dem Mittelpunkt jeweils einer der Kugeln $g_1$, $g_2$ usw. verbindet, läuft in diesem Fall auf die Lösung von Gleichungen dritten Grades hinaus, die mittels bekannter mathematischer Verfahren möglich ist. Von dem so ermittelten Schnittpunkt interessiert für die Berechnung des Bildes nicht mehr die z-Koordinate, sondern nur noch seine Koordinaten in einer horizontalen Ebene, d.h. der Schnittpunkt wird in die Ebene E' (Fig. 3) projiziert. Diese Koordinaten, in denen die Mittelpunkte der Metallkugeln abgebildet werden, werden im folgenden mit $u_g$ ($= u_1$, $u_2$ . . .) bzw. $v_g$ ($= v_1$, $v_2$ . . .) bezeichnet.

Zur Verdeutlichung der auf diese Weise erzielten Ergebnisse wird auf die Figuren 4a und 4b Bezug genommen. Fig. 4a stellt das Testobjekt G in einer Draufsicht dar, wobei seine Koordinaten mit $x_g$ und $y_g$ bezeichnet sind (der Index g steht bei dem vorgegebenen Beispiel für einen Wert zwischen 1 und 5). Das Testobjekt ist - bis auf einen Maßstabsfaktor - identisch mit einem von Verzerrungen völlig freien Testbild, das sich ergeben würde, wenn z.B. der Eingangsleuchtschirm eben wäre und parallel zur Fulcrumebene verlaufen würde.

Figur 4b zeigt demgegenüber - jeweils durch Kreuze angedeutet - die näherungsweise berechneten Koordinaten $u_g$ und $v_g$, in die die Bildpunkte aus dem unverzerrten Bild allein durch die geometrische Verzerrung überführt werden. Man erkennt eine kissenförmige Verzerrung, die symmetrisch zum Mittelpunkt verläuft, weil davon ausgegangen wird, daß sich Strahlenquelle und Röntgenbildverstärker in ihrer zentralen Position befinden. Bei einem schrägen Strahleneinfall sind die Verzerrungen unsymmetrisch und wesentlich ausgeprägter.

Weil bei der näherungsweisen Berechnung der Koordinaten $u_g$, $v_g$ nur geometrische Verzerrungen berücksichtigt werden, nicht aber auch die anderen Ursachen für die Verzerrungen, beispielsweise die Wirkung des Erdmagnetfeldes auf den Bildverstärker, entsprechen die so berechneten Koordinaten $u_g$, $v_g$ nur näherungsweise den Koordinaten der Bildpunkte, an denen die Mittelpunkte der Kugeln im verzerrten Bild tatsächlich abgebildet werden; jedoch liegen die berechneten Koordinaten $u_g$, $v_g$ wesentlich dichter bei den tatsächlichen Koordinaten als beispielsweise die zugehörigen Koordinaten im verzerrungsfreien Ausgangsbild (Fig. 4a).

Infolgedessen wird im nächsten Verfahrensschritt 102 (Fig. 5) in einem Suchfenster um jeden der berechneten Bildpunkte $u_g$, $v_g$ herum die tatsächliche Lage entsprechend der bekannten automatischen Mustererkennungsverfahren gesucht. Da die berechneten Koordinaten schon recht gut mit den tatsächlichen Koordinaten übereinstimmen, kann das Suchfenster entsprechend klein und das Mustererkennungsverfahren entsprechend einfach sein. Dabei kann beispielsweise der Mittelpunkt einer Kugel an der Stelle definiert werden, an der das im Speicher gespeicherte Signal einen Extremwert aufweist. Eine andere Möglichkeit besteht darin, den Mittelpunkt als den Schwerpunkt der von einer Abbildung einer Kugel belegten Bildpunkte zu definieren. Das automatische Suchverfahren (Verfahrensschritt 103), das sich auf die zuvor bestimmten Suchfenster beschränkt, liefert also die Koordinaten $s_g$, $t_g$, an denen die Mittelpunkte der Metallkugeln tatsächlich abgebildet werden. In Fig. 4b sind die auf diese Weise gemessenen Koordinaten $s_g$ und $t_g$ durch Kreise symbolisiert. Die berechneten Koordinaten $u_g$, $v_g$ und die gemessenen Koordinaten $s_g$, $t_g$ werden in dem Speicher 106 gespeichert.

Der Unterschied zwischen den gemessenen Koordinaten $s_g$, $t_g$ und den näherungsweise berechneten Koordinaten $u_g$, $v_g$ ist - jedenfalls an den Stellen, an denen sich starke Verzerrungen ergeben - wesentlich kleiner als der Unterschied zwischen den gemessenen Koordinaten $s_g$, $t_g$ und den Koordinaten $x_g$, $y_g$ (Fig. 4a), in denen die Mittelpunkte der Metallkugeln in einem unverzerrten Bild abgebildet worden wären. Diese geringen Abweichungen gestatten es, den Zusammenhang zwischen den berechneten Werten $u_g$, $t_g$ und den gemessenen Werten $s_g$, $t_g$ sehr genau durch eine Transformationsformation mathematisch zu beschreiben, insbesondere durch ein Polynom niedrigen (beispielsweise dritten) Grades. Wenn ein solches Polynom gefunden ist, gilt dieses nicht nur für die berechneten ($u_g$, $v_g$) und gemessenen ($s_g$, $t_g$) Bildpunkte, sondern für alle Bildpunkte $u$, $v$ bzw. $s$, $t$.

Demgemäß dient der nächste Verfahrensschritt 104 dazu, in den Gleichungen

$$s = b_0 + b_1 u + b_2 v + b_3 u^2 + b_4 uv + b_5 v^2 + b_6 u^3 + b_7 u^2 v + b_8 uv^2 + b_9 v^3 \qquad (2)$$

$$t = c_0 + c_1 u + c_2 v + c_3 u^2 + c_4 uv + c_5 v^2 + c_6 u^3 + c_7 u^2 v + c_8 uv^2 + c_9 v^3 \qquad (3)$$

die Koeffizienten $b_0 \ldots b_9$ bzw. $c_0 \ldots c_9$ so zu bestimmen, daß für $u = u_g$ und $v = v_g$ sich die gemessenen Koordinaten $s_g$, $t_g$ der Mittelpunkte im verzerrten Bild möglichst genau ergeben. Dies kann nach der Methode der kleinsten Fehlerquadrate (least-squares fit) geschehen (vergl. z.B. W.K. Pratt "Digital Image Processing", New York 1978, Seiten 429-432. - Bitte senden Sie uns eine Kopie dieser Literaturstelle oder einer anderen einschlägigen Literaturstelle). Die so gefundenen Koeffizienten werden gespeichert. Sie unterscheiden sich von Bild zu Bild, weil sich auch die Verzerrungen unterscheiden, und sie können sich auch bei identischen Anlagen von Anlage zu Anlage unterscheiden, wenn die zusätzlich zu Verzerrungen beitragenden Einflüsse (z.B. das Erdmagnetfeld) unterschiedlich einwirken.

Der folgende Schritt 105 besteht darin, für einen Bildpunkt mit den Koordinaten $x$, $y$ im unverzerrten Ausgangsbild die Koordinaten $s$, $t$ im verzerrten Eingangsbild näherungsweise unter Berücksichtigung der geometrischen Verzerrungen zu berechnen. Diese Berechnung ist identisch mit derjenigen gemäß Verfahrensschritt 101 mit dem einzigen Unterschied, daß sie nicht nur für diejenigen Koordinaten für $x_g$, $y_g$ im unverzerrten Bild erfolgt, an denen der Mittelpunkt einer Metallkugel abgebildet würde, sondern für einen beliebigen Bildpunkt völlig unabhängig von dem Testobjekt.

Die auf diese Weise näherungsweise berechneten Koordinaten $u$, $v$ sind im nächsten Verfahrensschritt (106) Ausgangspunkt für die Berechnung der zugehörigen Koordinaten $s$ und $t$ gemäß den Gleichungen (2) und (3).

In der Regel sind die so gefundenen Werte $s$, $t$ nicht ganzzahlig, d.h., sie beziehen sich nicht exakt auf einen Bildpunkt. Infolgedessen kann im nächsten Verfahrensschritt 107 eine Rundungsoperation, gegebenenfalls auch eine Interpolation erfolgen, die mindestens einen ganzzahligen Wert $s$, $t$ ergibt.

Nach einem weiter unten erläuterten Korrekturschritt 109 wird der Wert $x$ und/oder der Wert $y$ geändert (Schritt 108) und die Schleife 105 . . . 107 wird erneut durchlaufen, bis für alle Bildpunkte $x$, $y$ im unverzerrten Ausgangsbild der zugehörige Bildpunkt $s$, $t$ im verzerrten Eingangsbild berechnet ist.

Mit der so ermittelten Zuordnung zwischen den Werten $x$, $y$ einerseits und den Werten $s$, $t$ andererseits wird im Korrekturschritt 109 aus dem von dem Röntgenbildverstärker 2 bzw. von der Videokamera 4 gelieferten verzerrten Eingangsbild das entzerrte Ausgangsbild abgeleitet. Zu diesem Zweck wird jedem Bildpunkt $x$, $y$ ein Bildwert $B'(x, y)$ zugeordnet, der die Helligkeit des Ausgangsbildes bestimmt, und der von einem (oder mehreren) Bildwerten $B'(s, t)$ von einem Bildpunkt mit durch die Schritte 105 bis 108 berechneten Koordinaten $s$, $t$ (oder von mehreren Bildpunkten um die Koordinaten $s$, $t$ herum) abgeleitet wird.

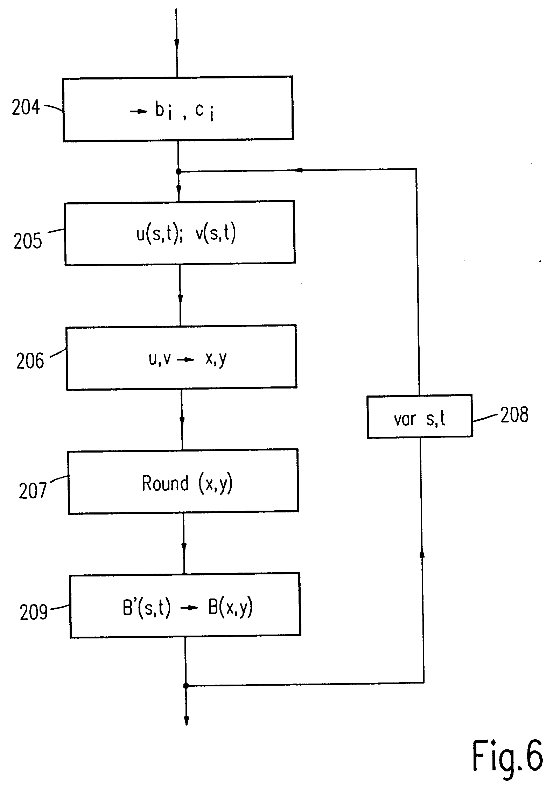

Der Zusammenhang zwischen den Koordinaten $x$, $y$ und den Zwischen-Koordinaten $u$, $v$ ist umkehrbar eindeutig. Das gleiche gilt für den Zusammenhang zwischen den Zwischen-Koordinaten $u$, $v$ und den Koordinaten $s$, $t$ im verzerrten Bild, so daß also auch zwischen den Koordinaten $x$, $y$ im unverzerrten Bild einerseits und den Koordinaten $s$, $t$ im verzerrten Bild andererseits ein umkehrbar eindeutiger Zusammenhang besteht. Infolgedessen ist es möglich, den anhand von Fig. 5 erläuterten Rechnungsgang, bei dem aus den Koordinaten $x$, $y$ im unverzerrten Bild die Zwischen-Koordinaten $u$, $v$ im verzerrten Bild und dann die tatsächlichen Koordinaten s, t im verzerrten Bild berechnet werden, umzukehren und stattdessen aus den Koordinaten s, t im verzerrten Bild über die ZwischenKoordinaten u, v die Koordinaten x, y im unverzerrten Bild zu berechnen. Auch in diesem Fall müssen die Rechenschritte 100 bis 103 wie zuvor erläutert durchgeführt werden und lediglich die Verfahrensschritte 104 bis 109 werden ersetzt durch die Verfahrensschritte 204 bis 209, die anhand von Fig. 6 erläutert werden.

Im Verfahrensschritt 204 werden aus den gemessenen Koordinaten $s_g$, $t_g$ und den näherungsweise berechneten Koordinaten $u_g$, $v_g$ Transformationspolynome bestimmt, mit denen aus den gemessenen Koordinaten $s_g$, $t_g$ die näherungsweise berechneten Koordinaten $u_g$, $v_g$ ermittelt werden können. Diese Transformationspolynome erhält man aus den Gleichungen (2) und (3), wenn man darin die Größen s bzw. t durch u bzw. v ersetzt und die Größen u bzw. v durch s bzw. t ersetzt. Die Polynomialkoeffizienten $b_0$ . . . $b_9$ und $c_0$ . . . $c_9$, die man aus diesen Gleichungen durch einen "least-squares-fit" ermittelt kann und unterscheiden sich naturgemäß von denjenigen, die man erhält, wenn man das gleiche Verfahren anwendet, um aus den näherungsweise berechneten Koordinaten u, v die tatsächlich gemessenen Koordinaten s, t zu errechnen. Die gefundenen Koeffizienten des Polynoms werden gespeichert.

Der folgende Schritt 205 dient dazu, aus den Koordinaten s, t eines Bildpunktes in dem von der Anordnung 2,4,5 gelieferten verzerrten Eingangsbild die Zwischen-Koordinaten u, v unter Anwendung dieser Transformationspolynome zu berechnen.

Aus den so gefundenen Zwischen-Koordinaten u, v dieses Bildpunktes werden im nächsten Schritt 206 unter Berücksichtigung nur der geometrischen Verzerrungen die Koordinaten x, y in einem unverzerrten Ausgangsbild berechnet. Hierzu wird in Gleichung (1) der Wert $r^2$ ersetzt durch $u^2 + v^2$. Die so modifizierte Gleichung läßt sich durch Lösung einer Gleichung dritten Grades nach z auflösen, wodurch man die Koordinaten u, v, z auf der Oberfläche des Eingangsleuchtschirms des Bildverstärkers 2 erhält, die den Zwischen-Koordinaten u, v im verzerrten Bild zugeordnet sind (vergl. Fig. 3). Verbindet man die so auf der Oberfläche des Eingangsleuchtschirms erhaltenen Punkte mit der jeweiligen Position der Strahlenquelle 1, dann ergeben sich Geraden, und der Durchstoßpunkt dieser Geraden durch eine zur z-Achse senkrechte Ebene - beispielsweise die Fulcrumebene - ergibt die Koordinaten der Projektion des Objektes in diese Ebene, woraus sich durch Multiplikation mit einem Skalierungs- bzw. Maßstabsfaktor die Koordinaten x, y im verzerrten Bild errechnen lassen.

Da die auf diese Weise ermittelten Werte x, y in der Regel nicht ganzzahlig ist, muß noch - analog zu Schritt 107 in Fig. 5 - eine Rundungsbzw. Interpolationsoperation durchgeführt werden (Schritt 207). Danach erfolgt ein Korrekturschritt 209, der inhaltlich mit dem Korrekturschritt 109 übereinsstimmen kann. Diese Operation wird Bildpunkt für Bildpunkt wiederholt, in dem in dem Verfahrensschritt 208 mindestens eine der Koordinaten s, t variiert wird, bis sämtliche Koordinaten des verzerrten Eingangsbildes durchlaufen sind.

Die Zuordnung zwischen den Werten x, y und s, t gemäß den Schritten 105 bis 108 kann für jede Röntgenaufnahme jedesmal neu berechnet werden. In diesem Fall müssen die Polynomialkoeffizienten $b_0$ . . . $b_9$ bzw. $c_0$ . . . $c_9$, die im Schritt 104 ermittelt wurden, ständig gespeichert bleiben, und das Verfahren zur quantitativen Ermittlung der Verzerrungen ist in diesem Fall bereits mit dem Schritt 104 bzw. 204 abgeschlossen. Dieser Teil des Verfahrens muß nur einmal durchgeführt werden, vorzugsweise bei der Installation der Röntgenanlage 1,2 oder aber in großen zeitlichen Abständen (bei Servicearbeiten oder beim Austausch von Teilen der Anlage). Die Schritte 105 . . . 109 bzw. 205 . . . 209 werden in diesem Fall jedesmal dann durchgeführt, wenn eine bzw. mehrere zu entzerrende Röntgenaufnahmen eines zu untersuchenden Patienten angefertigt werden. Wenn dabei nicht eine Schicht aus der Fulcrumebene 3 (Fig. 1) synthetisiert werden soll, sondern eine Schicht mit einer anderen Lage, was eine Relativverschiebung der in den verschiedenen Strahlenquellenpositionen erzeugten Röntgenaufnahmen erfordert, kann die erforderliche Verschiebung zu dem im Schritt 106 gefundenen Werten hinzuaddiert werden, bevor die Rundungs- bzw. Interpolationsoperation 107 erfolgt; dadurch kann der Gesamtfehler minimiert werden.

Man kann aber auch die einmal mit den Schritten 105 bis 108 berechnete Zuordnung zwischen den Bildpunkten x, y im unverzerrten Ausgangsbild und den Bildpunkten s, t im verzerrten Eingangsbild in Form einer Adreßliste speichern, und bei jeder Röntgenaufnahme die gespeicherte Zuordnung erneut aufrufen, wie in der DE-OS 38 43 232 (= PHD 88-268) beschrieben. In diesem Fall werden die Schritte 101 bis 108 bzw. 101 . . . 103 und 204 . . . 208) nur einmal (oder in größeren zeitlichen Abständen) durchgeführt. Die dabei erstellten Adreßlisten werden bei jeder Röntgenaufnahme zur Korrektur der Verzerrung herangezogen (Schritt 109), wobei der Korrekturschritt 109 (209) naturgemäß nicht innerhalb der in Fig. 5 dargestellten Schieile durchlaufen werden kann. Der Speicheraufwand ist hierbei wesentlich höher als bei der ersten Variante, jedoch steht dem ein verringerter Rechenaufwand gegenüber.

Gemäß Fig. 1 wurde davon ausgegangen, daß bei der Tomosyntheseanordnung Röntgenbildverstärker und Röntgenstrahler in parallelen Ebenen bzw. auf parallelen Bahnen bewegt werden. Die Erfindung ist aber auch anwendbar, wenn dabei der Röntgenstrahler bogenförmig um eine Zentralachse in der Fulcrumebene herum geschwenkt wird. Bei einer solchen bogenförmigen Schwenkbewegung ändert sich zusätzlich der Vergrößerungsmaßstab. Diese Änderung kann durch eine (vor dem Schritt 105) auszuführende Vergrößerungskorrektur kompensiert werden.

Dem Fachmann ist klar, daß er den entsprechend dem Diagramm der Fig. 5 programmierten Rechner 7 (Fig. 2) durch eine Hardwareanordnung mit speziellen Prozessoren ersetzen kann, welche die Verfahrensschritte gemäß Fig. 5 ausführt. Er wird diesen aufwendigeren Weg vor allem dann wählen, wenn es um Prozessoren ersetzen kann, welche die Verfahrensschritte gemäß Fig. 5 ausführt. Er wird diesen aufwendigeren Weg vor allem dann wählen, wenn es um besonders schnelle Bildverarbeitung geht.

**Patentansprüche**

1. Verfahren zum quantitativen Bestimmen der Verzerrungen von mittels eines Bildverstärkers erzeugten Röntgenaufnahmen, bei dem zunächst ein verzerrtes Röntgen-Testbild eines Testobjektes (G) angefertigt und die Koordinaten ($s_g$, und $t_g$) einer Anzahl diskreter Bildpunkte in dem Testbild gemessen werden, die innerhalb des Testobjektes Objektpunkten ($x_g$, $y_g$) mit definierter Lage und von ihrer Umgebung deutlich abweichende Absorption zugeordnet sind, gekennzeichnet durch folgende Verfahrensschritte:
   a) näherungsweise Berechnung der Koordinaten ($u_g$, $v_g$) der Bildpunkte im Testbild, in denen diese Objektpunkte abgebildet werden unter Berücksichtigung der geometrischen Verzerrungen,
   b) Bestimmung der Parameter von Transformationsfunktionen (s (u,v), t (u,v)), mit denen die gemessenen Koordinaten ($s_g$, $t_g$) aus den berechneten Koordinaten ($u_g$, $v_g$) berechenbar sind,
   c) näherungsweise Berechnung der Koordinaten (u, v) eines Bildpunktes in einem verzerrten Bild aus seinen Koordinaten (x, y) in einem unverzerrten Bild,
   d) Anwendung der Transformationsfunktionen gemäß b) auf die so berechneten Koordinaten (u, v) zwecks Ermittlung der tatsächlichen Koordinaten (s, t) im verzerrten Bild,

   e) Wiederholung der Schritte c) und d) für alle Bildpunkte.

2. Verfahren zum quantitativen Bestimmen der Verzerrungen von mittels eines Bildverstärkers erzeugten Röntgenaufnahmen, bei dem zunächst ein verzerrtes Röntgen-Testbild eines Testobjektes (G) angefertigt und die Koordinaten ($s_g$, und $t_g$) einer Anzahl diskreter Bildpunkte in dem Testbild gemessen werden, die innerhalb des Testobjektes Objektpunkten ($x_g$, $y_g$) mit definierter Lage und von ihrer Umgebung deutlich abweichende Absorption zugeordnet sind, gekennzeichnet durch folgende Verfahrensschritte:
   a) näherungsweise Berechnung der Koordinaten ($u_g$, $v_g$) der Bildpunkte im Testbild, in denen diese Objektpunkte abgebildet werden unter Berücksichtigung der geometrischen Verzerrungen,
   b) Bestimmung der Parameter von Transformationsfunktionen (u(s, t), t(u, v)), mit denen die näherungsweise berechneten Koordinaten ($u_g$, $v_g$) aus den gemessenen Koordinaten ($s_g$, $t_g$) berechenbar sind,
   c) Anwendung der Transformationsfunktionen gemäß b) auf die Koordinaten eines Bildpunktes (s, t) im verzerrten Bild zwecks Ermittlung der näherungsweise unter Berücksichtigung der geometrischen Verzerrungen berechenbaren Koordinaten,
   d) Berechnung der Koordinaten (x, y) eines Bildpunktes in einem entzerrten Bild aus den durch die Transformation erhaltenen Koordinaten (u,v),
   e) Wiederholung der Schritte c) und d) für alle Bildpunkte.

3. Verfahren nach Anspruch 1 oder 2, dadurch gekennzeichnet, daß zunächst die Koordinaten ($u_g$, $v_g$) der Bildpunkte im Testbild, in denen die Objektpunkte ($x_g$, $y_g$) abgebildet werden unter Berücksichtigung der geometrischen Verzerrungen näherungsweise berechnet werden, und daß die tatsächlichen Koordinaten ($s_g$, $t_g$) der Bildpunkte aus dem Testbild durch ein automatisches Mustererkennungsverfahren in einem Suchfenster um die näherungsweise berechneten Koordinaten ($u_g$, $v_g$) herum ermittelt werden.

4. Verfahren nach einem der vorhergehenden Ansprüche, bei dem eine Anzahl von aus unterschiedlichen Strahlenquellenpositionen aufgenommenen Röntgenaufnahmen zwecks Erzeugung eines Schichtbildes überlagert wird, dadurch gekennzeichnet, daß aus jeder Strahlenquellenposition je ein Röntgentestbild des Testobjekts (G) erzeugt wird, und daß jedes Testbild nach einem der vorhergehenden Ansprüche verarbeitet wird.

5. Anordnung zur Durchführung des Verfahrens nach Anspruch 1,
gekennzeichnet durch

    a) eine Strahlenquelle (1) zur Erzeugung eines Strahlenbündels,

    b) einen Röntgenbildverstärker (2) zur Umsetzung von Röntgenstrahlung in sichtbares Licht,

    c) einen Bildwandler (4, 5) zur Umsetzung eines sichtbaren Bildes in eine Folge von digitalen Bildwerten, die die Helligkeit des Bildes in seinen einzelnen Bildpunkten darstellen,

    d) eine Speicheranordnung (6) zur Speicherung der Bildwerte,

    e) Mittel zur Erzeugung eines Röntgentestbildes eines Testobjektes (G) mit Objektpunkten in definierter Lage ($x_g$, $y_g$) und mit von ihrer Umgebung deutlich abweichender Absorption,

    f) Mittel (103) zum Bestimmen der Koordinaten ($s_g$, $t_g$) der Bildpunkte im Testbild, in denen die Objektpunkte (91 ... 95) abgebildet werden,

    g) Mittel (101) zur näherungsweisen Berechnung der Koordinaten ($u_g$, $v_g$) der Bildpunkte im Testbild, in denen diese Objektpunkte ($x_g$,$y_g$,) abgebildet werden unter Berücksichtigung der geometrischen Verzerrungen,

    h) Mittel (104) zur Bestimmung der Parameter von Transformationsfunktionen (s(u,v), t(u,v)), mit denen die gemessenen Koordinaten ($s_g$, $t_g$) aus den berechneten Koordinaten ($u_g$, $v_g$) berechenbar sind.

    i) Mittel (6) zum Speichern der so bestimmten Parameter ($b_0$ . . . $b_9$) der Transformationsfunktionen,

    j) Mittel (105) zur näherungsweise Berechnung der Koordinaten (u, v) eines jeden Bildpunktes in einem verzerrten Bild aus seinen Koordinaten (x, y) in einem unverzerrten Bild,

    k) Mittel (106) zur Anwendung der gespeicherten Transformationsfunktionen auf die so berechneten Koordinaten (u, v) zwecks Ermittlung der tatsächlichen Koordinaten (s, t) im verzerrten Bild.

6. Anordnung zur Durchführung des Verfahrens nach Anspruch 1,
gekennzeichnet durch

    a) eine Strahlenquelle (1) zur Erzeugung eines Strahlenbündels,

    b) einen Röntgenbildverstärker (2) zur Umsetzung von Röntgenstrahlung in sichtbares Licht,

    c) einen Bildwandler (4,5) zur Umsetzung eines sichtbaren Bildes in eine Folge von digitalen Bildwerten, die die Helligkeit des Bildes in seinen einzelnen Bildpunkten darstellen,

    d) eine Speicheranordnung (6) zur Speicherung der Bildwerte,

    e) Mittel zur Erzeugung eines Röntgentestbildes eines Testobjektes (G) mit Objektpunkten in definierter ($x_g$, $y_g$) Lage und mit von ihrer Umgebung deutlich abweichender Absorption,

    f) Mittel (103) zum Bestimmen der Koordinaten ($s_g$, $t_g$) der Bildpunkte im Testbild, in denen die Objektpunkte abgebildet werden,

    g) Mittel (101) zur näherungsweisen Berechnung der Koordinaten ($u_g$, $v_g$) der Bildpunkte im Testbild, in denen diese Objektpunkte ($x_g$, $y_g$,) abgebildet werden unter Berücksichtigung der geometrischen Verzerrungen,

    h) Mittel (204) zur Bestimmung der Parameter ($b_0$ . . . $b_9$; $c_0$ ... $c_9$) von Transformationsfunktionen (u(s, t), v(s, t)), mit denen die näherungsweise berechneten Koordinaten ($u_g$, $v_g$) aus den gemessenen Koordinaten ($s_g$, $t_g$) berechenbar sind,

    i) Mittel (6) zum Speichern der so bestimmten Parameter der Transformationsfunktionen,

    j) Mittel (205) zur Anwendung der gespeicherten Transformationsfunktionen auf die Koordinaten (s, t) eines Bildpunktes im verzerrten Bild zum Erhalten von Zwischen-Koordinaten (u, v)

    k) Mittel (206) zur Berechnung der Koordinaten (x, y) in einem unverzerrten Bild aus den so ermittelten Zwischen-Koordinaten (u, v).

7. Anordnung nach einem der vorhergehenden Ansprüche,
dadurch gekennzeichnet, daß das Testobjekt (6) in einer Ebene eine Anzahl von vorzugsweise in einem quadratischen Raster angeordneten Metallkugeln enthält.

8. Anordnung nach Anspruch 5,
dadurch gekennzeichnet, daß die Kugeln in eine Kunststoffplatte eingebettet sind.

Fig.1

Fig.2

Fig.3

Fig.4 a

Fig.4 b

Fig.5

Fig.6